# EUROPEAN PATENT SPECIFICATION

(11) **EP 4 121 376 B1**
(45) Date of publication and mention of the grant of the patent: **05.06.2024**
(21) Application number: 21721173.9
(22) Date of filing: 11.03.2021
(51) Int. Cl.: B65G 21/14, A24C 5/35, B65G 47/51

(54) **CONVEYOR APPARATUS AND VARIABLE CAPACITY CONVEYOR APPARATUS**
FÖRDERVORRICHTUNG UND FÖRDERVORRICHTUNG MIT VARIABLER KAPAZITÄT
APPAREIL TRANSPORTEUR ET APPAREIL TRANSPORTEUR À CAPACITÉ VARIABLE

(30) Priority: 19.03.2020 PL 43329920
(43) Date of publication of application: 25.01.2023
(73) Proprietor: International Tobacco Machinery Poland Sp. z o.o., 26-600 Radom (PL)
(72) Inventor: SIKORA, Leszek, 26-600 Radom (PL); OWCZAREK, Radoslaw, 26-600 Radom (PL)
(74) Representative: Markieta, Jaroslaw Franciszek
(86) International application number: PCT/IB2021/052016
(87) International publication number: WO 2021/186298

(56) References cited:
- DE-A1- 1 915 647
- US-A- 4 813 527
- US-A- 5 046 603
- US-A1- 2011 120 835

## Description

The object of the invention is a conveyor apparatus and a variable capacity conveyor apparatus.

In the tobacco industry, conveyors adapted to convey flows of single layers of rod-like articles, such as cigarettes, filter rods, cigars, etc., as well as mass flows consisting of multiple layers of rod-like articles are known. Such conveyors may be grouped one after another to form variable capacity buffers. A high capacity buffer was disclosed in the patent EP2230951B1. A medium capacity buffer is known from the patent EP2464250B1. The patent application GB995663A shows a low capacity buffer. In all three patents, it is common for some conveyors to be movable to achieve a variation in capacity. There is a need to provide variable capacity buffers having movable conveyors that meet the requirements for the smallest possible overall surface dimensions and the smallest possible floor area occupied by the buffer. Low-capacity buffers are suitable for production lines with short downtimes.

US4813527 discloses a conveyor apparatus for conveying a mass flow of rod-like articles arranged transversely to the mass flow conveying direction, comprising: an endless conveying element having a conveying surface for supporting the mass flow of rod-like articles and driven to move along a looped path, a guide for guiding the conveying element along the said looped path, where the guide comprises a plurality of guide members arranged so as to be movable together in a serial configuration along a guide track.

US 5 046 603 A discloses a conveyor apparatus according to the preamble of claim 1.

The object of the invention is a conveyor apparatus for conveying a mass flow of rod-like articles as in claim 1. The a conveyor apparatus for conveying a mass flow of rod-like articles arranged transversely to the mass flow conveying direction, comprising: an endless conveying element having a conveying surface for supporting the mass flow of rod-like articles and driven to move along a looped path; a guide for guiding the conveying element along the said looped path, where the guide comprises a plurality of guide members arranged so as to be movable together in a serial configuration along a guide track of the conveyor apparatus. In the apparatus according to the invention the conveying element is provided with one or more sliding elements adapted to make a sliding contact with the guide members of the guide when the conveying element moves along the looped path.

In the apparatus according to a further aspect of the invention the successive guide members in the serial configuration are connected by means of joints.

In the apparatus according to a further aspect of the invention the plurality of guide members are arranged at least partially ir an area surrounded by the looped path, and one or more sliding elements are arranged on opposite side of the looped path towards the conveying surface.

In the apparatus according to a further aspect of the invention the plurality of guide members are arranged at least partially outside the area limited by the looped path, and one or more sliding elements are arranged on the opposite sides of the conveying element, transversely to the looped path.

In the apparatus according to a further aspect of the invention the conveying element comprises a chain comprising successively connected chain links, one or more than one or each of the chain links being provided with the sliding element.

In the apparatus according to a further aspect of the invention the conveying element comprises a belt, such belt having one or more sliding elements.

In the apparatus according to a further aspect of the invention the guide member is provided with a first guide structure for guiding one or more sliding members.

In the apparatus according to a further aspect of the invention the guide member is provided with a second guide structure for guiding one or more sliding elements, the first guide structure and the second guide structure being situated on the opposite sides of the guide member, transversely to the guide track.

In the apparatus according to a further aspect of the invention an end guide member of one end of the guide is provided with an end roller around which the conveying element is adapted to move.

In the apparatus according to a further aspect of the invention the guide member of an opposite end of the guide is provided with an end roller around which the conveying element is adapted to move.

The apparatus according to a further aspect of the invention comprises a rotary drive for driving the end roller to rotate about the axis of rotation to drive the conveying element, and a linear drive for driving a front roller to move linearly along a path of the front roller so as to move the guide along the guide track.

In the apparatus according to a further aspect of the invention the path of the end roller is rectilinear

In the apparatus according to a further aspect of the invention the rotary drive comprises a motor, and the motor is movable along a motor path, the motor path being parallel to the end roller path.

In the apparatus according to a further aspect of the invention the guide track comprises a first rectilinear part and a second part, the second part being either: curved; or at an angle to the first part and connected to the first part by means of the curved part.

The object of the invention is also a variable capacity conveyor apparatus according to claim 15 for the rod-like articles comprising: a linear conveyor; and a conveyor apparatus such as any of those described above, wherein the linear conveyor is situated below the conveyor apparatus, and wherein the conveyor apparatus has an inlet situated above the conveyor apparatus.

It is possible to implement a variable capacity buffer equipped with movable conveyors, with small overall dimensions and occupying a small floor area.

The object of the invention was shown in detail in a preferred embodiment in a drawing in which:
- Fig. 1: shows a variable capacity conveyor apparatus in the first embodiment in the maximum capacity position;
- Fig. 2: shows the conveyor apparatus of Fig. 1 in the intermediate position;
- Fig. 3: shows the conveyor apparatus of Fig. 1 in the minimum capacity position;
- Fig. 4, 5: show cross-sections of the apparatus of Fig. 1;
- Fig. 6: shows a variable capacity conveyor apparatus in the second embodiment in the maximum capacity position;
- Fig. 7: shows a variable capacity conveyor apparatus in the third embodiment in the maximum capacity position;
- Fig. 8: shows a variable capacity conveyor apparatus in the fourth embodiment in the maximum capacity position;
- Fig. 9: shows a variable-capacity conveyor apparatus in the fifth embodiment provided with two conveyor apparatuses, one in the maximum capacity position and the other in the intermediate position, and
- Fig. 10: shows a variable capacity conveyor apparatus in the sixth embodiment in the maximum capacity position.

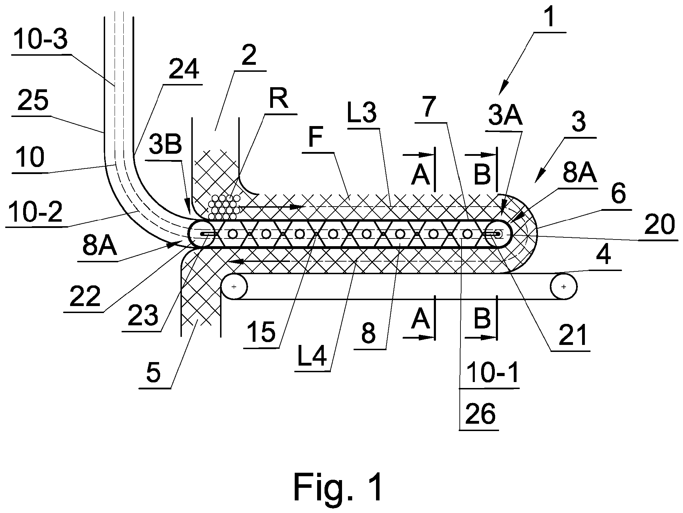

A variable capacity conveyor apparatus 1 in a first embodiment of the invention is shown in Fig. 1.

The variable capacity conveyor apparatus 1 according to the first embodiment supplies rod-like articles R in the form of a mass flow from an inlet 2 to an outlet 5. The mass flow comprises a mass of rod-like articles with a height of several articles, the rod-like articles R being oriented transversely to the direction in which they are conveyed and being adjacent to each other.

Between the inlet 2 and the outlet 5, the conveyor apparatus 3 and the conveyor 4 are successively situated. The inlet 2 is situated above the conveyor apparatus 3, the conveyor 4 is situated below the conveyor apparatus 3, also the outlet 5 is situated below the conveyor apparatus 3. The inlet 2 may be situated directly above or not directly above, but above the conveyor apparatus 3. The rod-like articles R fall from the inlet 2 onto the input end of the conveyor apparatus 3. The conveyor apparatus 3 conveys the rod-like articles R in a first direction, from left to right, as shown in Fig. 1, from the input position to the output position at the output end 3A of the conveyor apparatus 3. At the output end 3A of the conveyor apparatus 3, the rod-like articles R fall from the conveyor apparatus 3 onto the conveyor 4 in the input position of the conveyor 4. The end guide 6, which in the present embodiment comprises an arched surface extending around the output end 3A of the conveyor apparatus 3, is situated, as shown in Fig. 1, for guiding the rod-like articles R so that they move around the output end 3A and onto the conveying surface of the conveyor 4. The conveyor 4 conveys the rod-like articles R in a second direction, from right to left, as shown in Fig. 1, opposite to the direction in which the rod-like articles R are conveyed by the conveyor apparatus 3, until the rod-like articles R reach the output position at the output end of the conveyor 4.

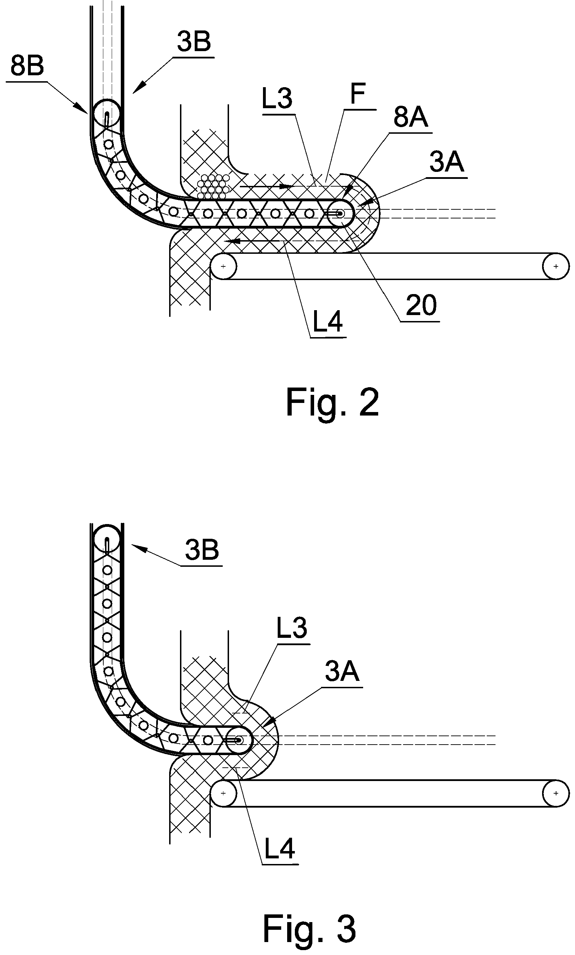

The conveyor apparatus 3 is provided with an endless conveying element 7, having a conveying surface that supports the rod-like articles R when the rod-like articles R are conveyed along the conveyor apparatus 3 in the first direction. The endless conveying element 7 moves along a loop, with the conveying part of the endless conveying element 7 supporting the rod articles R moving linearly in the first direction along one side of the centre line of the conveyor apparatus 3, while the return part of the endless conveying element moves in the second direction towards the end 3B below the centre line of the conveyor apparatus 3. The movement of the endless conveying element 7 along the looped path is carried out along a movable guide 8 which, as will be explained below, is movable along a guide track 10 from a first position as shown in Fig. 1, through a second, intermediate position, as shown in Fig. 2, to a third position shown in Fig. 3.

The conveyor 4 is also provided with an endless conveying element having a conveying surface that supports the rod-like articles when the rod-like articles R are conveyed linearly along the conveyor 4 in the second direction. The endless conveying element of the conveyor 4 also moves along the loop, whereas the conveying part of the endless conveying element supports the rod-like articles R moving in the second direction on one side of the centre line of the conveyor 4, and the return part of the endless conveying element moves in the first direction below the centre line of the conveyor 4.

In the embodiment shown, the conveyor 4 is situated parallel to the conveyor apparatus 3, but in other embodiments the conveyor 4 may be positioned at an angle to the conveyor apparatus 3.

In the embodiment shown, the endless conveying element 7 of the conveyor apparatus 3 has the form of a chain having a plurality of links, whereas adjacent links of the chain are successively connected with one another. In such configuration, the supporting surface being the conveying surface of the endless conveying element 7 is formed by the surfaces of the chain links opposite to the centre line of the conveyor apparatus 3. In an alternative embodiment, the endless conveying element 7 may be a conveyor belt. Such endless conveyor belts may be solid or perforated. The endless conveyor element of the conveyor 4 may have a similar or any other structure, the conveyor 4 may comprise several sections in the form of successive conveyors arranged one after another.

Between the input and output positions of the conveyor apparatus 3, the rod-like articles R are conveyed in a first direction along a first conveying length L3. By moving the movable guide 8 on which the conveyor element 7 moves around the looped path, a first conveying length L3 is varied. Between the input position and the output position on the conveyor 4, the rod-like articles R are conveyed in a second direction along a second conveying length L4. By moving the movable guide 8, the second conveying length L4 is varied.

In particular, as mentioned above and explained below, the movable guide 8 may be moved along the guide track 10 between a first position, as shown in Fig. 1, in which the output end 3A of the conveyor apparatus 3 is in a maximum position in the first direction, through a second intermediate position, as shown in Fig. 2, to a third position shown in Fig. 3 in which the output end 3A of the conveyor apparatus 3 is in a minimum position in the first direction.

In the first position, as shown in Fig. 1, the endless conveying element 7 and the conveyor 4 overlap to a maximum extent. In this configuration, the rod-like articles R falling from the inlet 2 onto the endless conveying element 7 travel along a maximum first conveying length L3 in the first direction before reaching the starting position of the conveyor apparatus 3. In this configuration, the rod-like articles R falling from the conveyor apparatus 3 reach a position on the conveyor 4 which is furthest from the outlet end of the conveyor 4 in the first direction. The rod-like articles R then travel along the maximum second conveying length L4 in the second direction, before reaching the outlet position on the conveyor 4, and thus the outlet.

When the movable guide 8 is moved along the guide track 10 from the first position shown in Fig. 1 to the intermediate, second position shown in Fig. 2, the overlap between the endless conveying element 7 and the conveyor 4 is reduced. In this configuration, the rod-like articles R falling from the inlet 2 onto the endless conveying element 7 travel along a relatively shorter first conveying length L3 in a first direction before reaching an initial position on the conveyor apparatus 3. In this configuration, the rod-like articles R falling from the conveyor apparatus 3 reach a position on the conveyor 4 that is relatively closer to the outlet end of the conveyor 4 in the first direction. The rod-like articles R then travel along a relatively shorter second conveying length L4 in a second direction, before reaching the outlet position on the conveyor 4, and thus the outlet.

When the movable guide 8 is moved along the guide track 10 from the second intermediate position shown in Fig. 2 to the third position shown in Fig. 3, the overlap between the endless conveying element 7 and the conveyor 4 is reduced to a minimum. In this configuration, the rod-like articles R falling from the inlet 2 onto the endless conveying element 7 travel along the minimum first conveying length L3 in the first direction before reaching the outlet position on the conveyor apparatus 3. In this configuration, the rod-like articles R fall from the conveyor apparatus 3 and reach a position on the conveyor 4 that is closest to the outlet end of the conveyor 4 in the first direction. The rod-like articles R then travel along the second length of the conveyor L4 in the second direction, before reaching the outlet position of the conveyor 4, and thus the outlet.

Therefore, the total quantity of rod-like articles collected in the variable capacity conveyor apparatus 3 varies continuously between a minimum and a maximum according to the position of the guide 8 which is movable along the guide track 10.

In the variable capacity conveyor apparatus for rod-like articles, each of the conveyors and the conveying apparatus are linear conveyors. In the embodiments shown, they extend along a straight line, thus providing a rectilinear path for linear conveying of the mass flow of rod-like articles. However, alternative configurations are possible in which the linear mass flow conveying section is followed further by conveying on a curved or arched path. The mass flow may be conveyed on a rectilinear path defined by adjacent straight line sections or on a path defined by a combination of straight line sections and curved or arched sections. In such configurations, the conveyor and/or the conveyor apparatus have corresponding constructions to provide such an alternative conveying path.

The length of the guide track 10 may be selected such that when the rear end of the movable guide 8 is withdrawn to its furthest position along the guide track 10, the front end 3A of the conveyor apparatus 3 remains in a position coinciding with the position of the conveyor of the conveyor apparatus when the conveyor is in the minimum capacity position. In other embodiments, the length of the guide track 10 may be selected such that when the rear end 8B of the movable guide 8 is withdrawn to its furthest position along the guide track 10, the front end 3A of the conveyor apparatus 3 is withdrawn beyond a position coinciding with the position of the conveyor apparatus 3 when the conveyor apparatus 3 is in the minimum capacity position.

According to other possible embodiments, in the minimum capacity position, the guide 8 or the conveyor apparatus 3 may overlap less than 20% or less than 10%, or there may be no overlap of the guide 8 or the conveyor apparatus 3 in the minimum capacity position.

The movement of the movable guide 8 along the guide track 10 may be controlled manually or may be controlled by a controller (not shown), such as an analogue or digital controller for industrial processes, a programmable controller, a personal computer, a minicomputer or a tablet computer. The signal may be transmitted by wire, wireless communication, optical fibre or any other communication method. Generally, the controller may receive signals from the apparatus upstream or downstream of the conveyor apparatus and may cause a variation in the capacity of the conveyor apparatus depending on the signals received.

The position of the movable guide 8 during the operation depends on the ratio between the rate of inflow from the inlet 2 and the rate of outflow from the outlet 5. If the inflow rate is higher than the outflow rate, the movable guide 8 will move to the right, and the conveyor apparatus 3 will stop after reaching its maximum position. If the inflow rate is lower than the outflow rate, the movable guide 8 will move to the left, and the conveyor apparatus 3 will stop after reaching the minimum position.

For example, when a feeding apparatus (situated upstream of the conveyor apparatus in the flow direction) provides a signal indicating a decreased or stopped flow of rod-like articles, the controller causes a decrease in the capacity of the conveyor apparatus. Conversely, when the feeding apparatus provides a signal indicating an increased or started flow of rod-like articles, the controller causes an increase in the capacity of the conveyor apparatus.

Similarly, when a receiving apparatus (situated downstream of the conveyor apparatus in the flow direction) provides a signal indicating a decreased or stopped flow of rod-like articles, the controller causes an increase in the capacity of the conveyor apparatus, and when the receiving apparatus provides a signal indicating an increased or started flow of rod-like articles, the controller causes a decrease in the capacity of the conveyor apparatus.

In other configurations, the inlet and/or outlet of the conveyor apparatus or the feeding and/or receiving apparatus may be provided with sensors, such as optical sensors, ultrasonic sensors or mechanical sensors, which may provide signals indicative of for example decreased, stopped, increased or started flow at the inlet and/or outlet. The controller may be configured to respond in a similar manner to signals from the apparatus upstream or downstream of the conveyor apparatus.

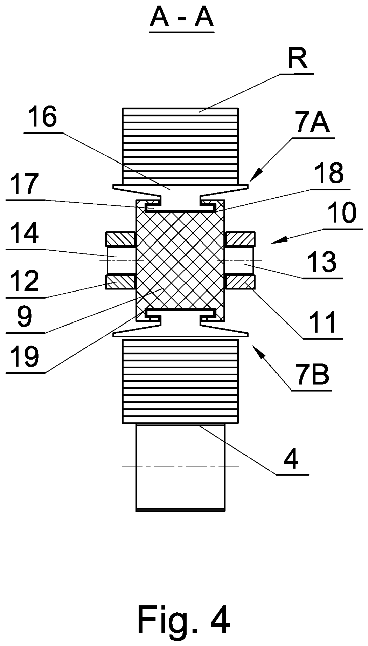

In this embodiment, the movable guide 8 comprises a plurality of guide members 9 which are adapted to move together along the guide track 10. One, some or all of the guide members 9 may have, for example, one or more corresponding protruding elements which extend transversely to the guide track 10 and which interact with one or more guides arranged parallel to the guide track 10 so that the movement of the guide members 9 along the guide track 10 is established. In the embodiment shown in Fig. 4, the guide members 9 are constrained to move along the guides 11, 12 by means of protruding elements in the form of pivots 13, 14 which, in this embodiment, are coaxial and each of which is constrained to move in a direction perpendicular to the guide track 10 by upper and lower guiding surfaces of the guides 11, 12 on which the pivots 13, 14 roll or slide.

While the guide members 9 may be constrained to move along the guide track 10 by means of guides 11, 12, the guide members 9 may be further constrained by guide walls 24, 25 arranged on opposite sides of the guide members 9 and adjacent to the guide members 9. The guide walls 24, 25 may also be arranged tangentially to the endless conveying element 7 so as to thus define a guide channel of the conveying apparatus 3, cooperating with the conveying surface of the conveying element 7.

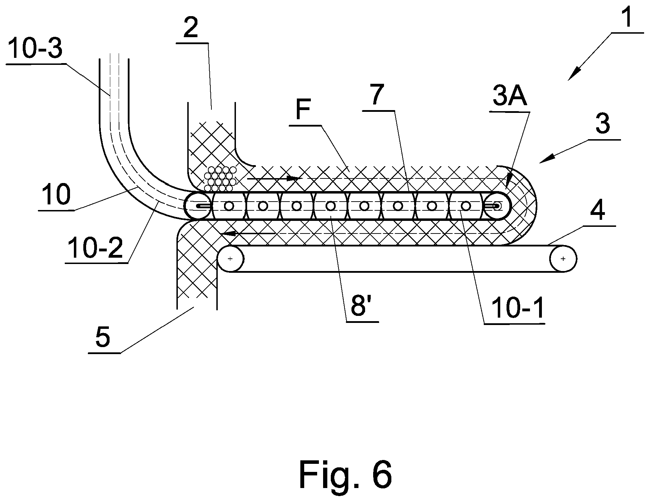

In this embodiment, the guide members 9 are arranged in a serial configuration, each guide member being connected to adjacent guide members such that movement of one guide member 9 causes a movement of all guide members 9. In this embodiment, the adjacent guide members 9 are connected to one another by means of joints 15, which may be of any known type, such as a universal joint, a flexible joint or a ball joint. The guide members 9 may also be arranged in a serial configuration without joint connections, for example the guide members may be adjacent to each other with rounded surfaces 16, as shown in Fig. 6. When the guide members 9 move along the guide track 10, they make pivoting motions or slide relative to adjacent guide members to allow the guide 8 to follow the guide track 10. In the embodiment shown in Fig. 4, the guide members 9 make pivoting motions or slide relative to one another in a vertical plane.

In the embodiment shown in Fig. 1, the guide track 10 comprises a first rectilinear section 10-1 and a second rectilinear section 10-3, connected by an intermediate curved section 10-2. In this configuration, the first rectilinear section 10-1 is horizontal. In this configuration, the second rectilinear section 10-3 is vertical to the conveying surface of the conveying element 7. The intermediate curved section is an arc, in particular one quarter of a circle. However, this configuration is an example and other configurations are possible, including those with two rectilinear sections being directly adjacent, with a generally rectilinear track, with or without intermediate curved or arched sections, a track comprising a first rectilinear section connected to a curved section, or any other configurations. The guide track may be any continuous track having at least two sections that have different directions in the case of a rectilinear section or tangential directions in the case of a curved or arched section.

In this embodiment, the conveying element 7 has the form of a chain comprising a plurality of adjacent links 16 connected to one another. As shown in Fig. 4, at least one of the links 16 has a sliding member 17 in the form of a foot situated on the side of the link 16 being opposite to the conveying surface of the link 16. As shown in Fig. 4, the foot is narrower in the transverse direction than the width of the conveying surface of the conveying element 7. Also possible are embodiments wherein several or all of the links 16 of the chain are configured with the sliding member 17 in a similar or identical manner. In this embodiment, all chain links are substantially configured as shown in Fig. 4.

The guide member 9, in this embodiment, has a first guiding structure 18 in the form of a channel in which the sliding member 17 is positioned slidably. As shown in Fig. 4, the channel has a first wider portion to accommodate a foot width in a direction transverse to the direction of movement of the sliding member 17 when the conveying element 7 moves along a looped path (closed loop shaped path). The sliding member or members 17 of the upper section 7A of the conveying member 7 are guided by sliding the sliding member 17 in the guiding structure 18. Thus the sliding member 17 is protected against a movement being transverse to the path by the side walls of the channel.

In this embodiment, the channel of the guiding structure 18 also has a second, narrower part having a width partially surrounding the channel, and at the same time accommodating a connecting part between the sliding member 17 and the main part of the chain link 16 having a conveying surface. In a direction transverse to the movement of the sliding member, the connecting part is narrower than the foot. The second, narrower part is narrower than the width of the sliding member 17 in the direction transverse to the movement of the sliding member 17. The sliding member 17 is thus held in the channel and also protects against vertical displacement, that is against displacement normal to the transverse direction and the direction of movement of the sliding member 17.

The sliding elements 17 of the lower section 7B of the conveying element 7 are similarly guided in a second guiding structure 19 of the guide member 9, also in the form of a channel designed similarly to the first guiding structure 18. The first guiding structure 18 and the second guiding structure 19 are situated on opposite sides of the guide member 9 transversely to the guide track 10.

In an alternative embodiment, wherein the conveying element 7 is a conveyor belt, one or more protrusions may be arranged on the lower surface of the conveyor belt or along the edge of the belt, and may perform a similar function.

In a further alternative embodiment, the conveying element 7 may have sliding elements extending transversely to the looped path and coupling to the guide structures of the guide member 9, whereas at least a part of them having guide structures is transversely adjacent to the looped path.

In this embodiment, the conveyor apparatus 3 is provided with two end rollers, a front roller 20 attached to the first end of the guide 9 by means of a fastener 21 and a rear roller 22 attached to the second, opposite end of the guide 9 by means of a fastener 23. The front roller is situated closest to the outlet end 3A of the conveyor apparatus 3, and the rear roller is situated furthest from the outlet end 3A, i.e. at the inlet end 3B of the conveyor apparatus 3. The conveying element 7 is arranged so as to wrap around both end rollers, i.e. the front roller 20 and the rear roller 22 along a looped path, whereas the guide 8 including the front roller 20 and the rear roller 22 is situated in an area surrounded by the looped path. As shown in Fig. 1, the conveyor 4 is provided with the front roller 20 and the rear roller 22 which are similarly configured.

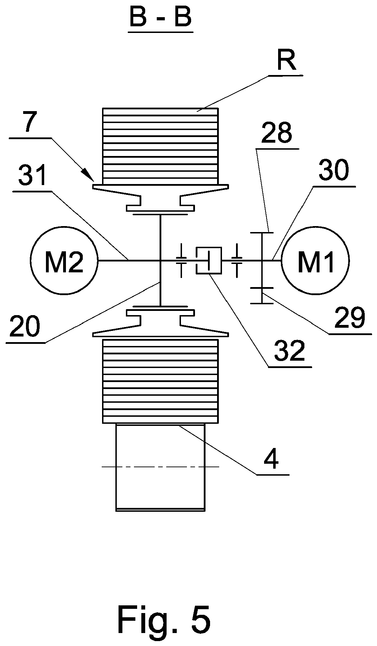

In this embodiment, the front roller 20 is rotatably driven around its axis of rotation by a motor M2 so that the conveying element 7 is moved along a looped path. The front roller 20 is also driven in a linear direction so as to move along the path 26 for this roller, thus causing the guide 8 to move along the guide track 10. In this embodiment, the path 26 for the roller 20 overlaps the first section 10-1 of the guide track 10, is as long as such section and is parallel to such section. In this embodiment, the path 26 for the roller 20 is a rectilinear path. The front roller 20 is driven in a linear direction by a motor M1. The motor M1, as shown in Fig. 5, drives a gear wheel 28 coupled to a toothed bar 29. The toothed bar 29 is coupled to the front roller 20 such that the position of the axis of rotation of the front roller 20 is fixed relative to the toothed bar 29. In this embodiment, a shaft 30 driven by the motor M1 is rotatably connected to a shaft 31 driven by the motor M2 by means of a rotary coupling 32. The motor M2 driving the conveying element 7 is thus movable along a path for the motor same as the path 26 for the roller 20.

The rotational movement and the linear movement described in relation to the front roller 20 may be interchangeably or additionally applied to the rear roller 22. Guides for guiding the movement of the front roller 20 and the rear roller 22 in the respective roller tracks are not shown. If used, the guides of the end rollers 20, 22 must be shaped so as to allow the guide 8 to move along the guide track 10. In other possible embodiments, the guides 11, 12 of the guide 8 may also be used for one of the end rollers, or for the front roller 20 as well as the rear roller 22.

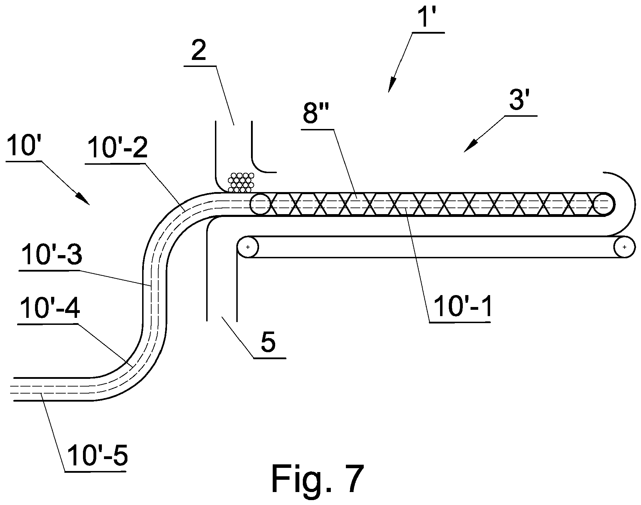

Fig. 7 shows a third embodiment of a variable capacity conveyor apparatus 1' having a guide track 10' for the conveyor apparatus 3', comprising three rectilinear sections 10'-1, 10'-3, 10'-5 and two curved sections 10'-2, 10'-4 adapted to guide a guide 8". The elements that are not described correspond, in structure and function, to those described for the first embodiment, except for the necessary adaptations.

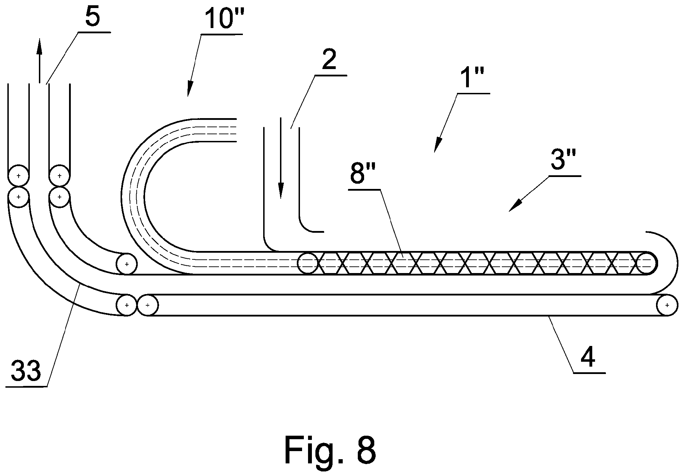

Fig. 8 shows a fourth embodiment of a conveyor apparatus 1" provided with the conveyor apparatus 3" corresponding to the conveyor apparatus 3 of the first embodiment (Fig. 6). In this embodiment, the guide track 10" comprises two horizontal straight line sections and an intermediate arched section which curves the guide track 10" back on itself. In order to reduce the capacity of the conveyor apparatus 1", at least the rear end of the guide track 8" first moves to the left, then continues to move to the left and upwards in the arched section, and then to the right and upwards. Downstream of the conveyor 4, there is a discharge conveyor 33 which conveys the rod-like articles from the outlet end of the conveyor 4 to the outlet 5. In this embodiment, the outlet 5 is situated above the mass flow output conveyor 4 and is directed upwards. This configuration allows saving space and reducing the floorspace occupied by the apparatus.

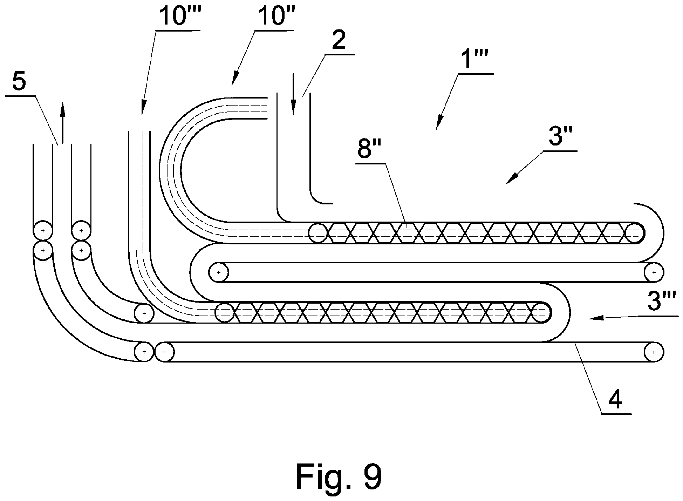

Fig. 9 shows a fifth embodiment of a variable capacity conveyor apparatus 1‴ provided with an upper conveyor apparatus 3" and a lower conveyor apparatus 3‴ situated one above the other. The upper conveyor apparatus 3" and the lower conveyor apparatus 3" correspond substantially in design and function to any of the conveyor apparatuses described above. In the position shown in Fig. 9, the upper conveyor apparatus 3" is in the maximum position, and the lower conveyor apparatus 3‴ is in the intermediate position. The lower conveyor apparatus 3‴ has a guide track 10‴ which comprises a straight section and an arched section. Since the embodiment shown in Fig. 9, like the embodiment of Fig. 8, has an output conveyor 33 which conveys rod-like articles from the outlet end of the conveyor 4 to the outlet 5, and the outlet of the mass flow is carried out from the conveyor 4 in an upward direction. The movement of the upper conveyor apparatus 3" and the lower conveyor apparatus 3‴ along their respective guide tracks may be synchronous, coordinated, or may be independently controlled by a controller (not shown) controlling respective motors of respective conveyor apparatuses.

Similar to the description of the embodiments of Figures 8 and 9, in other embodiments the variable capacity conveyor apparatus may be provided with a plurality of conveyor apparatuses with the functionality and the configuration disclosed herein. In these and other embodiments, the outlet 5 may be directed downwards, to the left or upwards, as shown in Fig. 9. Similarly, a feeding conveyor may be used to bring a mass flow of rod-like articles to the inlet 2 of the conveyor apparatus from any horizontal, vertical or angled direction.

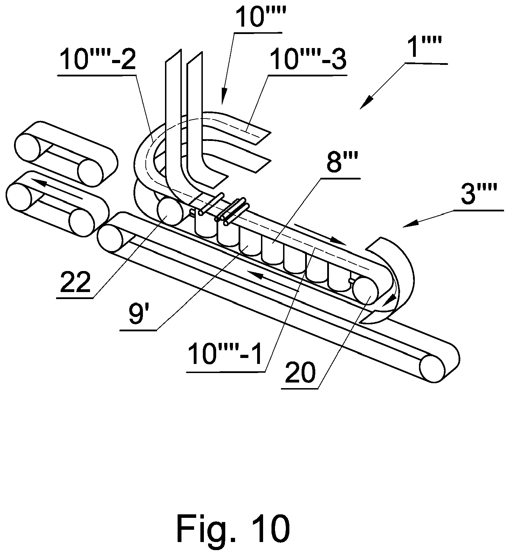

Fig. 10 shows a sixth embodiment of a variable capacity conveyor apparatus 1ʺʺ provided with a conveyor apparatus 3"" wherein a guide track 10"" is horizontally situated. In particular, the conveying surface of the conveying element 7 remains in a horizontal plane, while the guide 8" moves along the guide track 10"". This embodiment is different from previous ones wherein the guide is withdrawn along the guide track so that the conveying surface of the conveying element 7 is moved from a horizontal plane to a position crossing the horizontal plane or outside the horizontal plane, for example as a vertical position. Therefore, in the configurations disclosed in the previous embodiments, the guide does not have to maintain the same plane. In the configuration shown in Fig. 10, the guide track 10"" has two rectilinear sections 10""-1, 10""-3 and one arched section 10""-2 connecting the two rectilinear sections.

In a structural and functional configuration being similar to the previous embodiments, the guide 8" comprises end rollers and a plurality of guide members 9' in a serial configuration. As shown in Fig. 10, the front roller 20 and the rear roller 22 have horizontal axes. In the configuration of Fig. 10, the guide members 9' are configured so as to make swinging movements or to move relative to adjacent guide members in a horizontal plane, while the guide 8‴ moves along the guide track 10"". The guide members 9' may be connected by articulated or rotatable joints with vertical axes, or may adhere to adjacent guide members 9'. Due to such design, the variable capacity conveyor apparatus 1"" according to this embodiment may also provide small overall dimensions.

The embodiments described above are shown for illustration purposes only. Substitute solutions, modifications in the embodiments shown and equivalents may be used without affecting at least some of the effects and advantages of the configurations discussed above. Thus, the embodiments described above are to be understood as non-limiting, the invention is defined by the scope of the appended claims.

## Claims

1. A conveyor apparatus for conveying a mass flow of rod-like articles arranged transversely to the mass flow conveying direction, comprising:
an endless conveying element (7, 7') having a conveying surface for supporting the mass flow of rod-like articles (R) and driven to move along a looped path;
a guide (8, 8', 8") for guiding the conveying element (7, 7') along the said looped path,
where the guide (8, 8', 8") comprises a plurality of guide members (9) arranged so as to be movable together in a serial configuration along a guide track (10, 10') of the conveyor apparatus,
**characterized in that**
the conveying element (7, 7') is provided with one or more sliding elements (17) adapted to make a sliding contact with the guide members (9) of the guide (8, 8', 8") when the conveying element (7,7') moves along the looped path.

2. The apparatus as in claim 1, wherein the successive guide members (9) in the serial configuration are connected by means of joints (15).

3. The apparatus as in claim 1, wherein the plurality of guide members (9) are arranged at least partially in an area surrounded by the looped path, and one or more sliding elements (17) are arranged on the opposite side of the looped path towards the conveying surface.

4. The apparatus as in claim 1, wherein the plurality of guide members (9) are arranged at least partially outside the area limited by the looped path, and one or more sliding elements (17) are arranged on the opposite sides of the conveying element (7), transversely to the looped path.

5. The apparatus as in any of the claims from 1 to 4, wherein the conveying element (7, 7') comprises a chain comprising successively connected chain links (16), one or more or each of the chain links (16) being provided with the sliding element (17).

6. The apparatus as in any of the claims from 1 to 4, wherein the conveying element (7') comprises a belt, such belt having one or more sliding elements.

7. The apparatus as in any one of claims from 1 to 6, wherein the guide member (9) is provided with a first guide structure (18) for guiding one or more sliding elements (17).

8. The apparatus as in claim 7, wherein the guide member (9) is provided with a second guide structure (19) for guiding one or more sliding elements (17), the first guide structure (18) and the second guide structure (19) being situated on the opposite sides of the guide member (9), transversely to the guide track (10).

9. The apparatus as in claims from 1 to 8, wherein an end guide member (9) of one end (8A) of the guide (8) is provided with an end roller (20) around which the conveying element (7) is adapted to move.

10. The apparatus as in claim 9, wherein the guide member (9) of an opposite end (8B) of the guide (8) is provided with an end roller (22) around which the conveying element (7) is adapted to move.

11. The apparatus as in claim 9 or 10, wherein the apparatus comprises a rotary drive for driving the end roller (20) to rotate about the axis of rotation to drive the conveying element (7, 7'), and a linear drive for driving a front roller (20) to move linearly along a path (26) of the front roller so as to move the guide (8) along the guide track (10, 10').

12. The apparatus as in claim 11, wherein the path (26) of the end roller is rectilinear.

13. The apparatus as in claim 11 or 12, wherein the rotary drive comprises a motor (M2), and the motor is movable along a motor path, the motor path being parallel to the end roller path (26).

14. The apparatus as in any of the claims from 1 to 13, wherein the guide track (10, 10') comprises a first rectilinear part and a second part, the second part being either: curved; or at an angle to the first part and connected to the first part by means of the curved part.

15. A variable capacity conveyor apparatus (1, 1') for the rod-like articles (R), comprising:
a linear conveyor (4), and
a conveyor apparatus (3, 3') as in any of the claims 1 to 14,
wherein the linear conveyor (4) is situated below the conveyor apparatus (3, 3'), and
wherein the conveyor apparatus (1, 1') has an inlet (2) situated above the conveyor apparatus (3, 3').

## Patentansprüche

1. Fördervorrichtung zur Förderung eines Massenstroms von stabförmigen Gegenständen, die quer zur Förderrichtung des Massenstroms angeordnet sind, die Folgendes umfasst:
Ein endloses Förderelement (7, 7') mit einer Förderfläche zum Tragen des Massenstroms stabförmiger Gegenstände (R), das angetrieben wird, um sich entlang einer Schleifenbahn zu bewegen; eine Führung (8, 8', 8") zum Führen des Förderelements (7, 7') entlang der Schleifenbahn,
wobei die Führung (8, 8', 8") eine Vielzahl von Führungselementen (9) umfasst, die so angeordnet sind, dass sie gemeinsam in einer seriellen Konfiguration entlang einer Führungsbahn (10, 10') der Fördervorrichtung beweglich sind, **dadurch gekennzeichnet, dass**
das Förderelement (7, 7') mit einem oder mehreren Gleitelementen (17) versehen ist, die geeignet sind, einen Gleitkontakt mit den Führungselementen (9) der Führung (8, 8', 8") herzustellen, wenn sich das Förderelement (7, 7') entlang der Schleifenbahn bewegt.

2. Vorrichtung nach Anspruch 1, wobei die aufeinanderfolgenden Führungselemente (9) in der seriellen Konfiguration durch Verbindungselemente (15) verbunden sind.

3. Vorrichtung nach Anspruch 1, wobei die Mehrzahl der Führungselemente (9) zumindest teilweise in einem Bereich angeordnet sind, der von der Schleifenbahn umgeben ist, und ein oder mehrere Gleitelemente (17) auf der gegenüberliegenden Seite der Schleifenbahn in Richtung der Förderfläche angeordnet sind.

4. Vorrichtung nach Anspruch 1, wobei die Mehrzahl der Führungselemente (9) mindestens teilweise außerhalb des durch die Schleifenbahn begrenzten Bereichs angeordnet sind, und ein oder mehrere Gleitelemente (17) auf den gegenüberliegenden Seiten des Förderelements (7) quer zur Schleifenbahn angeordnet sind.

5. Die Vorrichtung nach einem der Ansprüche 1 bis 4, wobei das Förderelement (7, 7') eine Kette mit aufeinanderfolgend verbundenen Kettengliedern (16) umfasst, von denen eines oder mehrere oder jedes der Kettenglieder (16) mit dem Gleitelement (17) versehen ist.

6. Vorrichtung nach einem der Ansprüche 1 bis 4, wobei das Förderelement (7') ein Band umfasst, das ein oder mehrere Gleitelemente aufweist.

7. Vorrichtung nach einem der Ansprüche 1 bis 6, wobei das Führungselement (9) mit einer ersten Führungskonstruktion (18) zur Führung eines oder mehrerer Gleitelemente (17) versehen ist.

8. Vorrichtung nach Anspruch 7, bei der das Führungselement (9) mit einer zweiten Führungskonstruktion (19) zur Führung eines oder mehrerer Gleitelemente (17) versehen ist, wobei die erste Führungskonstruktion (18) und die zweite Führungskonstruktion (19) auf den gegenüberliegenden Seiten des Führungselements (9) quer zur Führungsspur (10) angeordnet sind.

9. Vorrichtung nach einem der Ansprüche 1 bis 8, wobei ein endseitiges Führungselement (9) an einem Ende (8A) der Führung (8) mit einer Endwalze (20) versehen ist, um die sich das Förderelement (7) bewegen kann.

10. Vorrichtung nach Anspruch 9, wobei das Führungselement (9) eines gegenüberliegenden Endes (8B) der Führung (8) mit einer Endwalze (22) versehen ist, um die sich das Förderelement (7) bewegen kann.

11. Vorrichtung nach Anspruch 9 oder 10, wobei die Vorrichtung einen Drehantrieb für den Antrieb der Endwalze (20) zur Drehung um die Drehachse umfasst, um das Förderelement (7, 7') anzutreiben, und einen Linearantrieb für den Antrieb einer Vorderwalze (20) zur linearen Bewegung entlang einer Bahn (26) der Vorderwalze umfasst, um die Führung (8) entlang der Führungsbahn (10, 10') zu bewegen.

12. Vorrichtung nach Anspruch 11, wobei die Bahn (26) der Endwalze geradlinig ist.

13. Vorrichtung nach Anspruch 11 oder 12, wobei der Drehantrieb einen Motor (M2) umfasst und der Motor entlang einer Motorbahn beweglich ist, wobei die Motorbahn parallel zur Bahn (26) der Endwalze verläuft.

14. Vorrichtung nach einem der Ansprüche 1 bis 13, wobei die Führungsbahn (10, 10') einen ersten geradlinigen Teil und einen zweiten Teil umfasst, wobei der zweite Teil entweder gekrümmt ist; oder in einem Winkel zum ersten Teil steht und mit dem ersten Teil über den gekrümmten Teil verbunden ist.

15. Fördervorrichtung (1, 1') mit variabler Kapazität für stabförmige Gegenstände (R), die Folgendes umfasst:
Einen Linearförderer (4) und
eine Fördervorrichtung (3, 3') nach einem der Ansprüche 1 bis 14,
wobei der Linearförderer (4) unterhalb der Fördervorrichtung (3, 3') angeordnet ist und
wobei die Fördervorrichtung (1, 1') einen Einlass (2) aufweist, der oberhalb der Fördervorrichtung (3, 3') angeordnet ist.

## Revendications

1. Un système de convoyeur pour le convoyage d'un débit massif d'articles en forme de tige disposés transversalement par rapport à la direction du convoyage du débit massif, comprenant :
un élément de convoyage sans fin (7, 7') ayant une surface de convoyage pour supporter le débit massif des articles en forme de tige (R) et entraîné de sorte à se déplacer le long d'une trajectoire en boucle ;
un guide (8, 8', 8") pour guider l'élément de convoyage (7, 7') le long de ladite trajectoire en boucle,
dans lequel le guide (8, 8', 8") comprend plusieurs membres de guidage (9) disposés de manière à pouvoir se déplacer ensemble dans une configuration en série le long d'un rail de guidage (10, 10') du système de convoyeur, **caractérisé en ce que**
l'élément de convoyage (7, 7') est pourvu d'un ou de plusieurs éléments coulissants (17) adaptés de sorte à créer un contact coulissant avec les membres (9) du guide (8, 8', 8") quand l'élément de convoyage (7,7') se déplace le long de la trajectoire en boucle.

2. Le système suivant la revendication 1, **caractérisé en ce que** les membres de guidage successifs (9) dans la configuration en série sont reliés au moyen d'articulations (15).

3. Le système suivant la revendication 1, **caractérisé en ce que** les divers membres de guidage (9) sont disposés au moins en partie dans une zone entourée par la trajectoire en boucle, et un ou plusieurs éléments coulissants (17) sont disposés sur le côté opposé de la trajectoire en boucle en direction de la surface de convoyage.

4. Le système suivant la revendication 1, **caractérisé en ce que** les divers membres de guidage (9) sont disposés au moins en partie en dehors de la zone délimitée par la trajectoire en boucle, et un ou plusieurs éléments coulissants (17) sont disposés sur les côtés opposés de l'élément de convoyage (7), transversalement par rapport à la trajectoire en boucle.

5. Le système suivant l'une des revendications 1 à 4, **caractérisé en ce que** l'élément de convoyage (7, 7') comprend une chaîne qui comprend des maillons de chaîne reliés successivement (16), un ou plusieurs ou chacun des maillons de chaîne (16) étant pourvus de l'élément coulissant (17).

6. Le système suivant l'une des revendications 1 à 4, **caractérisé en ce que** l'élément de convoyage (7') comprend une bande, cette dernière comportant un ou plusieurs éléments coulissants.

7. Le système suivant l'une des revendications 1 to 6, **caractérisé en ce que** le membre de guidage (9) est pourvu d'une première structure de guidage (18) pour guider un ou plusieurs éléments coulissants (17).

8. Le système suivant la revendication 7, **caractérisé en ce que** le membre de guidage (9) est pourvu d'une seconde structure de guidage (19) pour guider un ou plusieurs éléments coulissants (17), la première structure de guidage (18) et la seconde structure de guidage (19) étant situées sur les côtés opposés du membre de guidage (9), transversalement par rapport au rail de guidage (10).

9. Le système suivant les revendications 1 à 8, **caractérisé en ce qu'**un membre de guidage final (9) à une extrémité (8A) du guide (8) est pourvu d'un rouleau final (20) autour duquel l'élément de convoyage (7) est adapté pour se déplacer.

10. Le système suivant la revendication 9, **caractérisé en ce que** le membre de guidage (9) à une extrémité (8B) du guide (8) est pourvu d'un rouleau final (22) autour duquel l'élément de convoyage (7) est adapté pour se déplacer.

11. Le système suivant les revendications 9 ou 10, **caractérisé en ce que** le système comprend un entraînement rotatif pour entraîner le rouleau final (20) dans une rotation autour de l'axe de rotation pour entraîner l'élément de convoyage (7, 7'), et un entraînement linéaire pour entraîner un rouleau avant (20) dans un mouvement linéaire le long d'une trajectoire (26) du rouleau avant de sorte à déplacer le guide (8) le long du rail du guide (10, 10').

12. Le système suivant la revendication 11, **caractérisé en ce que** la trajectoire (26) du rouleau final est rectiligne.

13. Le système suivant les revendications 11 ou 12, **caractérisé en ce que** l'entraînement rotatif comprend un moteur (M2), et le moteur peut se déplacer le long d'une trajectoire du moteur, la trajectoire du moteur étant parallèle à la trajectoire du rouleau final (26).

14. Le système suivant l'une quelconque des revendications 1 à 13, **caractérisé en ce que** le rail de guidage (10, 10') comprend une première partie rectiligne et une deuxième partie, la deuxième partie étant soit courbe, soit en angle par rapport à la première partie et reliée à la première partie au moyen de la partie courbe.

15. Un système de convoyeur à capacité variable (1, 1') pour les articles en forme de tige (R), comprenant :
un convoyeur linéaire (4), et
un système de convoyeur (3, 3') suivant l'une des revendications 1 à 14,
**caractérisé en ce que** le convoyeur linéaire (4) est situé sous le système de convoyeur (3, 3'), et
**caractérisé en ce que** le système de convoyeur (1, 1') a une entrée (2) située au-dessus du système de convoyeur (3, 3').
